# EUROPEAN PATENT SPECIFICATION

(11) **EP 1 987 405 B1**
(45) Date of publication and mention of the grant of the patent: **21.07.2010**
(21) Application number: 07750630.1
(22) Date of filing: 09.02.2007
(51) Int. Cl.: G05B 19/42

(54) **AUTO-ADDRESS MULTI-SENSOR NETWORK**
SELBSTADRESSIERBARES MULTISENSORNETZWERK
RESEAU A CAPTEURS MULTIPLES A ADRESSAGE AUTOMATIQUE

(30) Priority: 21.02.2006 US 358249
(43) Date of publication of application: 05.11.2008
(73) Proprietor: AUTOLIV ASP, INC., Ogden, Utah 84405 (US)
(72) Inventor: BORAN, Colm, Novi, MI 48374 (US); SENYK, Myron, Rochester Hills, MI 48309 (US); EISWERTH, David, Wixom, MI 48393 (US); KELLY, Thomas, North Andover, MA 01845 (US)
(74) Representative: Beattie, Alex Thomas Stewart
(86) International application number: PCT/US2007/003805
(87) International publication number: WO 2007/097948

(56) References cited:
- EP-A- 0 980 165
- DE-A1- 4 214 644
- DE-C1- 4 038 992
- US-A1- 2004 078 097
- US-A1- 2005 132 109
- US-B1- 6 738 920

## Description

### BACKGROUND OF THE INVENTION

### 1. Field of the Invention

The present invention generally relates to remote sensor networks and more particularly to remote sensor networks having multiple sensors connected to a common communication line.

### 2. Description of the Known Technology

Automobiles are equipped with sensors for detecting a variety of conditions. One such condition in which sensors are used for detection is an automobile collision. When the sensors detect conditions indicative of an automobile collision, multiple safety devices will be activated to reduce injury to the occupants of the automobile. Because of the great importance placed on the protection of the occupants during an automobile collision, typically an array of sensors are often utilized.

Document US 2009/078 097 discloses such an array of sensors.

In an effort to reduce the complexity of sensor systems, it is preferred to communicate signals from- several sensors on a common communication line. In operation of such networks, only one of the multiple sensors of an array may transmit data at a given time to a receiver via a common communication line. If more than one sensor transmits its data to the receiver, the output of both sensors may interfere with each other and the receiver will receive an incorrect signal. One solution to this problem is to utilize sensors that are preprogrammed to transmit their data to the communication line during a specified time interval within a discrete time signal window. Each sensor connected to the common communication line must be programmed such that only one sensor communicates with the receiver during a given time segment of the time signal window. Conversely, if the wrong preprogrammed sensors are utilized, there may be a time interval in which no sensor transmits data to the communication line.

During manufacturing, it is possible to inadvertently place on the communication line two or more sensors which are preprogrammed to communicate during the same time interval. In order to prevent this situation from arising, each sensor is made to be physically unique and given a separate part number to denote the time interval during which the sensor transmits its data. These requirements further increase the cost of manufacturing.

One solution to avoid making physically unique sensor and assigning separate part numbers is to implement sensors having a serial communication line connected to a controller. During a set up mode, the controller will assign separate addresses to each of the sensors. The sensors will only transmit their data to the communication line when the controller informs the sensor at a specific address to transmit data. However, this has the drawback of requiring a two way communication line and additional hardware, further increasing cost.

Therefore, there exists a need for a cost effective solution that allows multiple sensors that are identical in manufacture, to be placed on a common communication line while avoiding the problem of simultaneous transmission of data to the communication line by more than one sensor.

### BRIEF SUMMARY OF THE INVENTION

In overcoming the drawbacks and limitations of the known technology, a sensor network and method of initializing the sensor network for motor vehicle applications is disclosed. The sensor network includes a receiver, and a plurality of sensor assemblies. The receiver has an output and the sensor assemblies each have a first and second pin.

The receiver and the sensor assemblies are connected in a daisy chain type configuration. Specifically, the first pin of the first sensor assembly is connected to the output of the receiver. The second pin of each sensor assembly is connected to the first pin of the next sensor assembly.

When in operation, the sensor assemblies draw a quiescent current that is provided from the output of the receiver and flows through the sensor assemblies. The first sensor assembly draws current directly from the output of the receiver. The second sensor assembly draws current from the second pin of the first sensor assembly. Additional sensors are connected in the same fashion, with each "downstream" sensor assembly drawing current from the second pin of the "upstream" sensor assembly. The amount of quiescent current drawn by the second sensor assembly will be less than the amount of quiescent current drawn by the first sensor assembly. Each sensor assembly will measure the amount of current passing from the first pin to the second pin, thereby determining the amount of quiescent current drawn by sensor assemblies downstream. Using this measurement, each sensor assembly will be able to determine their position on the sensor network and determine a discrete time signal window. The discrete time signal window is a portion of time reserved for the transmission of data triggered by a synchronization pulse. The synchronization pulse is provided by the receiver.

Each sensor assembly includes a sensor configured to output a sensor signal and a logic unit. The logic unit is connected to the sensor and configured to receive the sensor signal, determine the discrete time signal window and output a current modulated signal based on the sensor signal to the first sensor pin during the discrete time signal window.

The logic unit further includes a current monitor configured to measure the quiescent current passing from the first pin to the second pin during an initialization phase. The logic unit further includes an output control unit, configured to determine the discrete time signal window to output the sensor signal based on the amount of quiescent current passing from the first pin to the second pin and output the sensor signal to the first pin during the discrete time signal window.

As to the method, current is first passed from the first pin to the second pin. While the current is flowing, a measurement will be taken of the amount of current passing from the first pin to the second pin. Using this current measurement, a specific time interval to output the sensor signal to the first pin will be determined. This method may further include the steps of providing the sensor assembly with a synchronization pulse and outputting the sensor signal to the first pin during the previously determined discrete time signal window triggered by the synchronization pulse.

These and other advantages, features, and embodiments of the invention will become apparent from the drawings, detailed description, and claims, which follow.

### BRIEF DESCRIPTION OF THE DRAWINGS

Figure 1 is a block diagram of the components of a sensor assembly in accordance with one embodiment of the present invention;

Figure 2 is a block diagram of components of a sensor assembly in accordance with another embodiment of the present invention;

Figure 3 is a block diagram of the sensor network in accordance with one embodiment of the present invention; and

Figure 4 is a timing diagram showing the output of the sensor assemblies in relation to a synchronization pulse.

### DETAILED DESCRIPTION OF THE INVENTION

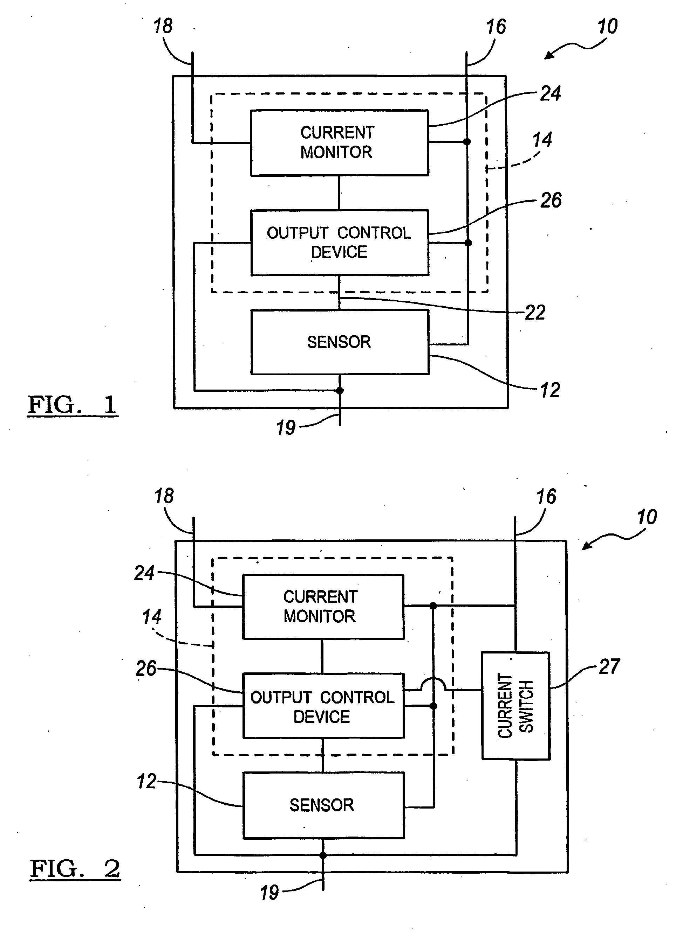

Referring now to Figure 1, a sensor assembly 10 is shown. The sensor assembly 10 includes a sensor 12 and a logic unit 14. The logic unit 14 is connected to a first pin 16, a second pin 18 and a return pin 19 while the sensor 12 is connected to the logic unit 14 and the first pin 16.

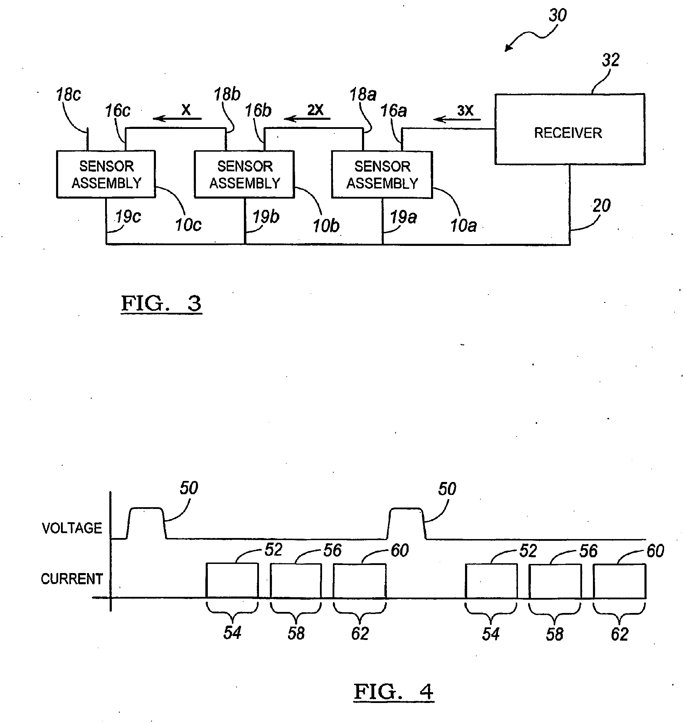

The logic unit 14 includes a current monitor 24 connected between the first pin 16 and the second pin 18. The current monitor 24 may be a current sense resistor or any current monitoring device that is now known or later developed. An output control device 26 is connected to the current monitor 24, the first pin 16, the return pin 19 and an output 22 of the sensor 12. When in operation, the sensor 12 outputs a sensor signal to the output control unit 26 via the output 22. The sensor signal may be data indicating a variety of different variables including, but not limited to, acceleration, deformation, pressure, magnetorestrictive and acoustic.
As will be fully described later, when in operation, the current monitor 24 will output a current value to the output control device 26 based on the amount of current passing from the first pin 16 to the second pin 18. The amount of current passing from the first pin to the second pin represents the total current draw of all "downstream" sensor assemblies as will be shown in Figure 3. Thereafter, the output control device 26 will determine a discrete time signal window for data transmission based on the current value and output a current modulated signal based on the sensor signal to the first pin 16 during the discrete time signal window triggered by a synchronization pulse. Preferably, the current modulated signal utilizes Manchester encoding. The discrete time signal window may be determined during a specific time interval following powering up the sensor assembly 10.

There may be some instances where the quiescent current drawn by the sensor assembly 10 may be so diminutive, that the current cannot be measured by the current monitor 24. In order to avoid this situation, the output control device 26 of a downstream sensor may be configured to increase the amount of current drawn by the downstream sensor assembly by directing a greater amount of current to the return pin 19.

Referring to Figure 2, another embodiment of the invention is shown. Similar reference numerals are used to reference similar components. The system 10 includes a current switch 27 connected to the first pin 16, the return pin 19 and output control device 26. The output control device 26 will instruct the current switch 27 to direct a greater amount of current to the return pin 19. By so doing, the current drawn by the sensor assembly 10 may be increased, thereby avoiding the problem of having a quiescent current too diminutive.

Referring now to Figure 3, a daisy chained sensor network 30 is shown. The daisy chained sensor network 30 includes a receiver 32, first sensor assembly 10a, a second sensor assembly 10b and a third sensor assembly 10c. The first sensor assembly 10a, the second sensor assembly 10b and the third sensor assembly 10c are identical to the sensor assembly 10 described in Figure 1. Accordingly, the first, second and third sensor assemblies 10a, 10b, and 10c have a first pin 16a, 16b, and 16c a second pin 18a, 18b, and 18c respectively. The sensor assemblies 10a, 10b, and 10c and are connected to a power return 20 via return pins 19a, 19b and 19c respectively.

For illustrative purposes, only three sensor assemblies are shown. Any number of sensor assemblies 10 may be utilized so long as there is an adequate time interval to encompass multiple discrete time signal windows.

The receiver 32 is connected to the power return 20 and a power supply (not shown). The receiver 32 and the sensor assemblies 10a, 10b, and 10c are connected in a daisy chain type configuration. The receiver 32 is connected to the first pin 16a of the first sensor assembly 10a. Connected to the second pin 18a of the first sensor assembly 10a is the first pin 16b of the second sensor assembly 10b. Finally, the second pin 18b of the second sensor assembly 10b is connected to the first pin 16c of the third sensor assembly 10c and the second pin 18c of the third sensor assembly 10c is not connected to anything, thus, completing the daisy chain.

When in operation, the receiver 32 provides a first current to the first pin 16a of the first sensor assembly 10a as represented by the arrow labeled 3X. From there, a portion of the first current will flow to the power return 20, while another portion of the first current will flow through to the second pin 18a of the first sensor assembly 10a through a current monitor, as best shown in Figure 1 as the current monitor 24.

Similarly, a second current passing from the second pin 18a of the first sensor assembly 10a will be channeled to the first pin 16b of the second sensor assembly 10b as represented by the arrow labeled 2X. From there, a portion of the second current will flow to the power return 20, while another portion of the second current will flow through to the second pin 18b of the second sensor assembly 10b through a current monitor, as best shown in Figure 1 as the current monitor 24.

Finally, a third current passing from the second pin 18b of the second sensor assembly 10b will be channeled to the first pin 16c of the third sensor assembly 10c as represented by the arrow labeled X. From there, the third current will flow to the power return 20 because the second pin 18c of the third sensor assembly 10c is disconnected. Therefore, no current will flow through a current monitor, as best shown in Figure 1 as the current monitor 24.

As partially described earlier, the current monitors of the first, second and third sensor assemblies 10a, 10b, and 10c will output their current values to their respected output control devices based on the amount of current passing from the first pins 16a, 16b and 16c to the second pins 18a, 18b and 18c.

The output control devices of the first, second and third sensor assemblies 10a, 10b, and 10c will receive the differing current values and will determine discrete time signal windows to transmit the sensor signals of the sensors to the first pins 16a, 16b, and 16c based on the differing current values. The current values represent the current draw of "downstream" sensor assemblies. By determining the current draw of the "downstream" sensor assemblies, the position of the sensor assembly and a correct discrete time signal window can be determined. These discrete time signal windows are triggered by a synchronization pulse provided by receiver 34. The discrete time signal windows will differ from one another, thus, preventing more than one of output control the devices from outputting the output signals of the sensors to the first pins 16a, 16b, and 16c.

Referring now to Figures 3 and 4, an example showing the sensor assemblies 10a, 10b and 10c outputting data is shown. The receiver 32 will provide the synchronization pulse 50 to the sensor assemblies 10a, 10b and 10c. Because the sensor assemblies 10a, 10b, and 10c are connected in a daisy chain configuration, the synchronization pulse 50 will propagate to each of the output control devices of the sensor assemblies 10a, 10b, and 10c. Once the output control devices have received the synchronization pulse 50, the output control devices will use the synchronization pulse 52 as a trigger in determining when to output the sensors signals.

For example, the first sensor assembly 10a will only output the current modulated signal based on the output of its sensor (as illustrated as block 52) to the first pin 16a during a first discrete time signal window 54 which was previously determined based on the current value provided by the current monitor during the initialization phase. Likewise, the second and third sensor assemblies 10b and 10c will only output the current modulated signals based on the output signals of their sensors (as illustrated as blocks 56 and 60 respectively) to their first pins 16b and 16c during a second and third discrete time signal windows 58 and 62 respectively. Once the third time discrete time signal window has passed, the process may begin again.

The foregoing description of various embodiments of the invention has been presented for purposes of illustration and description. It is not intended to be exhaustive or to limit the invention to the precise embodiments disclosed. Numerous modifications or variations are possible in light of the above teachings. The embodiments discussed were chosen and described to provide the best illustration of the principles of the invention and its practical application to thereby enable one of ordinary skill in the art to utilize the invention in various embodiments and with various modifications as are suited to the particular use contemplated. All such modifications and variations are within the scope of the invention as determined by the appended claims when interpreted in accordance with the breadth to which they are fairly, legally, and equitably entitled.

## Claims

1. A sensor assembly (10) for a motor vehicle configured for use in a daisy chain sensor network (30), the sensor assembly (10) comprising:
a first pin (16) and a second pin (18);
a sensor (12) configured to output a sensor signal;
said sensor assembly (10) **characterized by**:
a current monitor (24) configured to output a current value to an output control device (26), the current value being based on the amount of current passing from the first pin (16) to the second pin (18);
the output control device (26) configured to determine a time signal window (54, 58, 62) for data transmission based on the current value and output a current modulated signal based on the sensor signal to the first pin (18) during the time signals window (54, 58, 62) referenced by a synchronization pulse (50).

2. The assembly of claim 1, wherein the current monitor (24) is a current sense resistor.

3. The assembly of claim 1, wherein the output control device (26) is configured to adjust the amount of current drawn by the sensor assembly (10).

4. The assembly of claim 1, further **characterized by** a current switch (27) connected to the output control device (26), the first pin (16) and a return pin (19) and configured to adjust the amount of current drawn by the sensor assembly (10).

5. The assembly of claim 1, wherein the sensor (12) is an accelerometer.

6. The assembly of claim 1, wherein the sensor (12) is a deformation sensor.

7. The assembly of claim 1, wherein the sensor (12) is a pressure sensor.

8. The assembly of claim 1, wherein the sensor (12) is a magnetorestrictive sensor.

9. The assembly of claim 1, wherein the sensor (12) is an acoustic sensor.

10. The assembly of claim 1, wherein the discrete time signal window (54, 58, 62) is determined during a specific time interval following powering up the sensor assembly (10).

11. A method for initializing a sensor assembly (10) for a motor vehicle, connected to a daisy chain network (30) and having a first pin (16) and a second pin (18), the method **characterized by** the steps of:
providing a current passing from the first pin (16) to the second pin (18);
measuring the amount of current passing from the first pin (16) to the second pin (18);
providing the sensor assembly (10) with a synchronization pulse (50);
determining a discrete time signal window (54, 58, 62) to output a sensor signal to the first pin (16) based on the amount of current passing from the first pin (16) to the second pin (18), the discrete time signal window (54, 58, 62) being referenced by the synchronization pulse (50) ; and
outputting the sensor signal to the first pin (16) during the discrete time signal window (54, 58, 62) triggered by the synchronization pulse (50).

12. The method of claim 11, wherein the discrete time signal window (54, 58, 62) is determined during a specific time interval following activation of the sensor assembly (10).

## Patentansprüche

1. Sensoranordnung (10) für ein Kraftfahrzeug, die zur Verwendung in einem Daisy-Chain (Verkettungs)-Sensornetz (30) konfiguriert ist, wobei die Sensoranordnung (10) Folgendes umfasst:
einen ersten Stift (16) und einen zweiten Stift (18);
einen Sensor (12), der dazu konfiguriert ist, ein Sensorsignal auszugeben;
wobei die Sensoranordnung (10) **gekennzeichnet ist durch**:
einen Strommotor (24), der dazu konfiguriert ist, einen Stromwert an eine Ausgabesteuerungsvorrichtung (26) auszugeben, wobei der Stromwert auf dem Betrag an Strom basiert, der von dem ersten Stift (16) zu dem zweiten Stift (18) fließt;
die Ausgabesteuerungsvorrichtung (26), die dazu konfiguriert ist, ein Zeitsignalfenster (54, 58, 62) für eine Datenübertragung auf der Grundlage des Stromwerts zu bestimmen und ein strommoduliertes Signal auf der Grundlage des Sensorsignals an den ersten Stift (16) während des Zeitsignalfensters (54, 58, 62), das von einem Synchronisierungsimpuls (50) referenziert wird, auszugeben.

2. Anordnung nach Anspruch 1, wobei der Strommotor (24) ein Strommesswiderstand ist.

3. Anordnung nach Anspruch 1, wobei die Ausgabesteuerungsvorrichtung (26) dazu konfiguriert ist, den Betrag an von der Sensoranordnung (10) aufgenommenem Strom einzustellen.

4. Anordnung nach Anspruch 1, weiterhin **gekennzeichnet durch** einen Stromschalter (27), der mit der Ausgabesteuerungsvorrichtung (26), dem ersten Stift (16) und einem Rückstift (19) verbunden und dazu konfiguriert ist, den Betrag an von dem Sensoranordnung (10) aufgenommenes Strom einzustellen.

5. Anordnung nach Anspruch 1, wobei der Sensor (12) ein Beschleunigungsmesser ist.

6. Anordnung nach Anspruch 1, wobei der Sensor (12) ein Verformungssensor ist.

7. Anordnung nach Anspruch 1, wobei der Sensor (12) ein Drucksensor ist.

8. Anordnung nach Anspruch 1, wobei der Sensor (12) ein magnetorestriktiver Sensor ist.

9. Anordnung nach Anspruch 1, wobei der Sensor (12) ein Akustiksensor ist.

10. Anordnung nach Anspruch 1, wobei das diskrete Zeitsignalfenster (54, 58, 62) während eines spezifischen Zeitintervalls bestimmt wird, das auf das Hochfahren der Sensoranordnung (10) folgt.

11. Verfahren zum Initialisieren einer Sensoranordnung (10) für ein Kraftfahrzeug, die mit einem Daisy-Chain-Netz (30) verbunden ist und einen ersten Stift (16.) und einem zweiten Stift (18) aufweist, wobei das Verfahren **gekennzeichnet ist durch** die folgenden Schritte:
Bereitstellen eines Stroms, der von dem ersten Stift (16) zum zweiten Stift (18) fließt;
Messen des Betrags an Strom, der von dem ersten Stift (16) zu dem zweiten Stift (18) fließt;
Versehen der Sensoranordnung (10) mit einem Synchronisierungsimpuls (50);
Bestimmen eines diskreten Zeitsignalfensters (54, 58, 62) zum Ausgeben eines Sensorsignals an den ersten Stift (16) auf der Grundlage des Betrags an Strom, der von dem ersten Stift (16) zu dem zweiten Stift (18) fließt, wobei das diskrete Zeitsignalfenster (54, 58, 62) von dem Synchronisierungsimpuls (50) referenziert wird; und
Ausgeben des Sensorsignals an den ersten Stift (16) während des diskreten Zeitsignalfensters (54, 58, 62), das von dem Synchronisierungsimpuls (50) ausgelöst wird.

12. Verfahren nach Anspruch 11, wobei das diskrete Zeitsignalfenster (54, 58, 62) während eines spezifischen Zeitintervalls bestimmt wird, das auf die Aktivierung der Sensoranordnung (10) folgt.

## Revendications

1. Un ensemble détecteur (10) pour véhicule à moteur configuré pour être utilisé sur un réseau de détecteurs en marguerite (30), l'ensemble détecteur (10) comprenant :
une première tige (16) et une deuxième tige (18) ;
un détecteur (12) configuré pour émettre un signal ;
ledit ensemble détecteur (10) **se caractérisant par** :
un dispositif de surveillance du courant (24) configuré pour envoyer une valeur de courant à un dispositif de contrôle de sortie (26), la valeur de courant dépendant de la quantité de courant passant de la première tige (16) à la deuxième tige (18) ;
le dispositif de contrôle de sortie (26) configuré pour déterminer une fenêtre de signal temporel (54, 58, 62) pour la transmission des données en fonction de la valeur de courant et envoyer un signal modulé de courant en fonction du signal envoyé par le détecteur à la première tige (16) pendant la fenêtre de signal temporel (54, 58, 62) référencée par une impulsion de synchronisation (50).

2. L'ensemble de la revendication 1, dans lequel le dispositif de surveillance du courant (24) est une résistance détectrice de courant.

3. L'ensemble de la revendication 1, dans lequel le dispositif de contrôle de sortie (26) est configuré pour ajuster la quantité de courant tirée par l'ensemble détecteur (10).

4. L'ensemble de la revendication 1, se caractérisant également par un interrupteur de courant (27) connecté au dispositif de contrôle de sortie (26), à la première tige (16) et à une tige de rappel (19) et configuré pour ajuster la quantité de courant tirée par l'ensemble détecteur (10).

5. L'ensemble de la revendication 1, dans lequel le détecteur (12) est un accéléromètre.

6. L'ensemble de la revendication 1, dans lequel le détecteur (12) est un détecteur de déformation.

7. L'ensemble de la revendication 1, dans lequel le détecteur (12) est un détecteur de pression.

8. L'ensemble de la revendication 1, dans lequel le détecteur (12) est un détecteur mag nétorestrictif.

9. L'ensemble de la revendication 1, dans lequel le détecteur (12) est un détecteur acoustique.

10. L'ensemble de la revendication 1, dans lequel la fenêtre de signal temporel discret (54, 58, 62) est déterminée pendant un intervalle de temps spécifique après la mise sous tension de l'ensemble détecteur (10).

11. Une méthode d'initialisation d'un ensemble détecteur (10) pour véhicule à moteur, connecté à un réseau en marguerite (30) et ayant une première tige (16) et une deuxième tige (18), la méthode étant **caractérisée par** les étapes suivantes :
fournir un courant passant de la première tige (16) à la deuxième tige (18) ;
mesurer la quantité de courant passant de la première tige (16) à la deuxième tige (18) ;
fournir une impulsion de synchronisation (50) à l'ensemble détecteur (10) ;
déterminer une fenêtre de signal temporel discret (54, 58, 62) pour l'envoi d'un signal du détecteur à la première tige (16) en fonction de la quantité de courant passant de la première tige (16) à la deuxième tige (18), la fenêtre de signal temporel discret (54, 58, 62) étant référencée par l'impulsion de synchronisation (50) ; et
envoyer le signal du détecteur à la première tige (16) pendant la fenêtre de signal temporel discret (54, 58, 62) déclenchée par l'impulsion de synchronisation (50).

12. La méthode de la revendication 11, dans laquelle la fenêtre de signal temporel discret (54, 58, 62) est déterminée pendant un intervalle de temps spécifique suivant l'activation de l'ensemble détecteur (10).
